(19) Europäisches Patentamt
European Patent Office
Office européen des brevets

(11) **EP 4 332 892 A1**

(12) **EUROPEAN PATENT APPLICATION**

(43) Date of publication:
**06.03.2024 Bulletin 2024/10**

(21) Application number: **22193455.7**

(22) Date of filing: **01.09.2022**

(51) International Patent Classification (IPC):
**G06T 7/11** *(2017.01)*      **G06T 7/194** *(2017.01)*
**G06T 7/62** *(2017.01)*

(52) Cooperative Patent Classification (CPC):
**G06T 7/62; G06T 7/11; G06T 7/194;**
G06T 2207/20081; G06T 2207/20084

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventors:
• KULKARNI, Nikhil Vikram
  Eindhoven (NL)
• PATIL, Ravindra
  Eindhoven (NL)
• KOCKX, Franciscus Nicolaas
  Eindhoven (NL)

(74) Representative: **Philips Intellectual Property &
Standards
High Tech Campus 52
5656 AG Eindhoven (NL)**

(54) **ESTIMATING VOLUMES OF LIQUID**

(57)   Proposed concepts thus aim to provide schemes, solutions, concept, designs, methods and systems pertaining to estimating a volume of liquid in an at least partially transparent container. This can be achieved by automatically processing an input image of a transparent/translucent container containing liquid in order to obtain a background-modified image, wherein the background image data has been removed or altered. A prediction of the volume of liquid in the container may then be determined by processing the background-modified image with a machine-learning algorithm.

FIG. 2

**Description**

FIELD OF THE INVENTION

This invention relates to the field of estimating volumes of liquid, and in particular to the field of estimating volumes of liquids in at least partially transparent containers.

BACKGROUND OF THE INVENTION

Estimating volumes of liquids in differently shaped containers, especially translucent ones, is a particularly difficult technical problem, the solution of which would be beneficial in a variety of fields. In particular, estimating the volume of liquids in translucent or transparent containers may be useful when estimating the volume of breast milk in milk bottles or breast pump containers. It may also be useful in laboratory and industrial environments.

However, from mere images, it can be hard to determine the volume of liquids in transparent or translucent containers, e.g. due to the different/non-standard shapes of containers and the blending of the background with the container due to its transparency/translucency.

There is therefore a need to develop approaches for reliably deriving the volume of liquid in at least partially transparent containers, irrespective of the shape of the container.

SUMMARY OF THE INVENTION

The invention is defined by the claims.

According to examples in accordance with an aspect of the invention, there is provided a method for estimating a volume of liquid in an at least partially transparent container.

The method comprises: processing an input image of an at least partially transparent container containing liquid with an image background removal algorithm to obtain a background-modified image, the background-modified image being a modified version of the input image wherein background image data has been removed or altered; and processing the background-modified image with a machine-learning algorithm to obtain a prediction of the volume of liquid in the at least partially transparent container.

Proposed concepts thus aim to provide schemes, solutions, concept, designs, methods and systems pertaining to estimating a volume of liquid in an at least partially transparent container. In particular, embodiments aim to provide a method to derive a prediction or estimation of the volume of liquid in a transparent or translucent container from processing a single input image of the container.

In other words, it is proposed that a single input image of an at least partially translucent container containing a volume of liquid may be analysed, in order to obtain a prediction of the volume of liquid in the container within the image. Such an input image may be obtained by use of a device that a user may commonly already have access to, such as a smartphone.

By only needing a single input image, embodiments may support estimation of volumes of liquid in at least partially transparent containers without any specialised hardware. An improved method for estimating volumes of liquid in transparent or translucent containers may therefore be provided by proposed concepts.

For instance, by automatically processing an input image of a transparent/translucent container containing liquid in order to obtain a background-modified image, wherein the background image data has been removed or altered, a prediction of the volume of liquid in the container may be determined by processing the background-modified image with a machine-learning algorithm. It is proposed that prediction a volume of liquid in a container may be improved when a background of the image, i.e. any image data not containing information about the container, has been removed or altered in some way.

The use of image data alone to derive a prediction of the volume of liquid in an at least partially transparent container may permit, for instance, a volume of milk expressed into a breast pump container to be automatically measured without the use of any special hardware, i.e. with only a smartphone.

This invention may be of particular use in the case of measuring the volume of milk in a breast pump container or baby's bottle. These bottles are commonly at least translucent and are of varying shapes and sizes. A method capable of estimating a volume of liquid, i.e. milk, in a breast pump container or a baby's bottle that is shape/size agnostic and only requires a single image would therefore be of particular benefit. In other words, in any of the herein disclosed methods, the liquid may comprise breast milk, and the container may be a breast pump container or a baby's bottle.

Ultimately, an improved method for estimating a volume of liquid in at least partially transparent container may be supported by the proposed concept(s).

In some embodiments, processing the background-modified image with a machine-learning algorithm may be preceded by: converting the background-modified image to a heatmap, wherein the value of a pixel in the heatmap describes a pixel intensity value change of the pixel with respect to its neighbouring pixels.

It has been found that the use of heatmaps may increase the accuracy of predicting a volume of liquid in an at least partially transparent container, by achieving increased distinction between liquid pixels and non-liquid pixels. The heatmap may be a colour heatmap, which gives the intensity of colour change in an image with respect to neighbouring pixels. In addition to the intensity of colour change, or instead of, the heatmap may also take into account the colour of the pixels themselves. Heatmaps may, however, also be applicable to greyscale/black and white images (e.g. through analysis of an intensity or greyscale value changes). By increasing the distinction between liquid pixels and non-liquid pixels, based on their pixel intensity values, prediction of the volume of liquid may be made more accurate.

In some embodiments, processing the background-modified image with a machine-learning algorithm may be preceded by: enhancing the contrast of the background-modified image. By enhancing the contrast of the background-modified image, the accuracy of predicting a volume of liquid in a container may be increased. Contrast enhancement may, for example, comprise contrast limited adaptive histogram equalization (CLAHE).

In some embodiments, processing the background-modified image with a machine learning algorithm may comprise: providing the background-modified image as an input to a convolutional neural network, CNN, the first CNN being trained to predict, for the background-modified image, the volume of liquid in the at least partially transparent container. CNNs have been proved to be particularly successful at analysing images, and being able to identify objects within images, with a much lower error rate than other types of neural network.

In some embodiments, the CNN may be trained using a training algorithm configured to receive an array of training inputs and respective known outputs, wherein a training input comprises an image of an at least partially transparent container containing liquid and respective known output comprises the volume of liquid in the at least partially transparent container. In this way, the CNN may be trained to output an estimation of the volume of liquid in an at least partially transparent container when provided with an image of the at least partially transparent container containing liquid.

In some embodiments, the CNN may be a pre-trained model further trained on images of an at least partially transparent container that have been manually annotated. This allows the CNN to become especially proficient at predicting the volume of liquid in an at least partially transparent container.

In some embodiments, processing the input image with an image background removal algorithm may comprise: providing the input image as an input to a neural network-based processing algorithm trained to predict, for the input image: a mask for identifying an object of interest in the input image; and removing or altering background image data of the input image based on the predicted mask, so as to generate the background-modified image. By predicting a mask for an object of interest in the input image, i.e. a container, the background can more easily removed or altered.

In some embodiments, the neural network-based processing algorithm may comprise: a convolutional layer configured to generate a feature map for the input image; a region proposal network configured to determine a region of interest in the image based on the feature map; a first fully convolutional network configured to determine, based on the region of interest, a mask for identifying an object of interest in the input image; and a second fully convolutional network configured to determine, based on the region of interest, a box that bounds the at least partially transparent container in the input image. By first generating a feature map, via the use of a convolutional layer, or layers, a region of interest may be more easily determined. Fully convolutional networks may then be used for pixel wise segmentation of the image in order to determine a mask for identifying an object of interest, i.e. the container, and a box that bounds the container.

In some embodiments, the second fully convolutional network may be configured to determine, based on the region of interest, a classification of the object of interest. For example, the object may be classified as an unrelated object, a container or, specifically, a breast pump container or a baby's bottle.

In some embodiments, removing or altering background image data of the input image may comprise: calculating a size of the box; and based on a comparison of the calculated size of the box with a predetermined threshold value, re-sizing the input image.

By calculating the size of the box, an approximation of the size of the container in the image may be determined, which can be used to calculate a re-sizing of the input image in order that they may more closely match images used in training data so that the volume of liquid in the container may be more easily predicted.

In some embodiments, removing or altering background image data of the input image may comprise: providing the input image and the predicted mask as an input to a Mask R-CNN, the Mask R-CNN being trained to predict, for each pixel of input image, a pixel classification. Mask R-CNNs have been proved to be particularly successful at classifying pixels within images with a much lower error rate than other types of neural network.

In some embodiments, there is provided a computer program comprising code means for implementing any of the methods described above when said program is run on a processing system.

According to another aspect of the invention, there is provided a processor arrangement configured to: process the input image with an image background removal algorithm to obtain a background-modified image, the background-modified image being a modified version of the input image wherein background image data has been removed or altered; and process the background-modified image with a machine-learning algorithm to obtain a prediction of the volume of liquid in the at least partially transparent container.

According to another aspect of the invention, there is provided a system for estimating a volume of liquid in an at least partially transparent container, the system comprising: an input interface configured to obtain an input image of an at least partially transparent container containing liquid; and an image processing unit configured to: process the input image with an image background removal algorithm to obtain a background-modified image, the background-modified image being a modified version of the input image wherein background image data has been removed or altered; and process the background-modified image with a machine-learning algorithm to obtain a prediction of the volume of liquid in the at least partially transparent container.

In some embodiments, the system or processor arrangement described above may further comprise a user interface configured to receive, from the system or processor arrangement, and display the prediction of the volume of liquid in the at least partially transparent container.

Thus, there may be proposed concepts for estimating a volume of liquid in an at least partially transparent container, and this may done based on the processing of an input image of the at least partially transparent container.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 is a simplified flow diagram of a method for estimating a volume of liquid in an at least transparent container according to a proposed embodiment;
Fig. 2 is a more in-depth flow diagram of a method for estimating a volume of liquid in an at least transparent container according to a proposed embodiment;
Fig. 3 is a more in-depth flow diagram of a method of processing the input image with an image background removal algorithm according to a proposed embodiment;
Fig. 4 is a simplified block diagram of a system for estimating a volume of liquid in an at least transparent container according a proposed embodiment; and
Fig. 5 illustrates an example of a computer within which one or more parts of an embodiment may be employed.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

It should be understood that the Figures are merely schematic and are not drawn to scale. It should also be understood that the same reference numerals are used throughout the Figures to indicate the same or similar parts.

Implementations in accordance with the present disclosure relate to various techniques, methods, schemes and/or solutions pertaining to estimating a volume of liquid in an at least partially transparent container. According to proposed concepts, a number of possible solutions may be implemented separately or jointly. That is, although these possible solutions may be described below separately, two or more of these possible solutions may be implemented in one combination or another.

Embodiments of the invention aim to provide a method for estimating a volume of liquid in an at least partially transparent container. This can be achieved by automatically processing an input image of a transparent/translucent container containing liquid in order to obtain a background-modified image, wherein the background image data has been removed or altered (e.g. nullified or replaced with a single predetermined pixel value). A prediction of the volume of liquid in the container may then be determined by processing the background-modified image with a machine-learning algorithm.

Proposed concepts thus aim to obtain a prediction of the volume of liquid in an at least partially transparent container by use of image data alone. This may permit, for instance, a volume of milk expressed into a breast pump container (or baby's feeding bottle) to be automatically measured without the use of any special hardware, e.g. with only a smartphone or camera-equipped tablet computer. The automatically measured volume of milk may also be automatically communicated to a user and/or stored in a memory, e.g. in a memory of the smartphone.

Embodiments may therefore be of particular relevance to the case of measuring the volume of milk in a breast pump container or baby's bottle. Such containers/bottles are typically at least partially translucent and are of varying shapes and sizes. A method capable of estimating a volume of liquid, i.e. milk, in a breast pump container or a baby's bottle that is shape/size agnostic and only requires a single image would therefore be of great use. In other words, in any of the herein disclosed methods, the liquid may be milk, and the container may be a breast pump container or a baby's bottle.

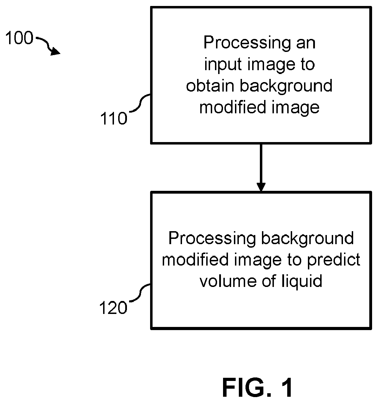

Referring now to Fig. 1, there is depicted a flow diagram of a method 100 for estimating a volume of liquid in an at least partially transparent container according to a proposed embodiment.

The method begins with the step 110 of processing an input image of an at least partially transparent container containing liquid with an image background removal algorithm to obtain a background-modified image, the background-modified being a modified version of the input image wherein background image data has been removed or altered. The input image can be obtained using existing or conventional devices that include cameras already owned by a user. For instance, a conventional device may be one of: a smartphone, a tablet, a laptop, or any other suitable device. Details of this processing step will be more fully explained later.

In step 120, the background-modified image is processed with a machine-learning algorithm to obtain a prediction of the volume of liquid in the at least partially transparent container.

In some embodiments, processing the background-modified image with a machine learning algorithm, i.e. step 120, may comprise: providing the background-modified image as an input to a convolutional neural network, CNN, the first CNN being trained to predict, for the background-modified image, the volume of liquid in the at least partially transparent container. CNNs have been proved to be particularly successful at analysing images, and being able to identify objects within images, and hence backgrounds, with a much lower error rate than other types of neural network.

The structure of an artificial neural network (or, simply, neural network) is inspired by the human brain. Neural networks are comprised of layers, each layer comprising a plurality of neurons. Each neuron comprises a mathematical operation. In particular, each neuron may comprise a different weighted combination of a single type of transformation (e.g. the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

There are several types of neural network, such as convolutional neural networks (CNNs) and recurrent neural networks (RNNs). This exemplary embodiment of the present invention employs CNN-based learning algorithms, becuase CNNs have proved to be particularly successful at analyzing images, and are able to identify objects within images with a much lower error rate than other types of neural network.

CNNs typically contain several layers, including a convolutional layer, a pooling layer, and a fully connected layer. The convolutional layer consists of a set of learnable filters and extracts features from the input. The pooling layer is a form of non-linear down-sampling, reducing the data size by combining the outputs of a plurality of neurons in one layer into a single neuron in the next layer. The fully connected layer connects each neuron in one layer to all the neurons in the next layer.

Methods of training a machine-learning algorithm are well known. Typically, such methods comprise obtaining a training dataset, comprising training input data entries and corresponding training output data entries. An initialized machine-learning algorithm is applied to each input data entry to generate predicted output data entries. An error between the predicted output data entries and corresponding training output data entries is used to modify the machine-learning algorithm. This process can be repeated until the error converges, and the predicted output data entries are sufficiently similar (e.g. $\pm 1\%$) to the training output data entries. This is commonly known as a supervised learning technique.

For example, weightings of the mathematical operation of each neuron may be modified until the error converges. Known methods of modifying a neural network include gradient descent, backpropagation algorithms and so on.

The training input data entries for the first CNN which may be used in step 120 correspond to example images of an at least partially transparent container containing liquid. The training output data entries correspond to the known volumes of liquid in the at least partially transparent containers. Further, several pre-processing methods may be employed to improve the training samples. In other words, the first CNN may be trained using a training algorithm configured to receive an array of training inputs and respective known outputs, wherein a training input comprises an image of an at least partially transparent container containing liquid and a respective known output comprises the volume of liquid in the at least partially transparent container. In this way, the CNN may be trained to output a prediction of the volume of liquid in an at least partially transparent container when provided with an image of the at least partially transparent container containing liquid.

The CNN may be a pre-trained model further trained on images of an at least partially transparent container that have been manually annotated. For example, due to the complex shapes of many containers, short videos may be taken of containers from all angles and all possible volume levels. Images may then be extracted from the videos in order to serve as training inputs with known volumes of liquid. This allows the CNN to become especially proficient at predicting the volume of liquid in an at least partially transparent container, regardless of the shape of the container.

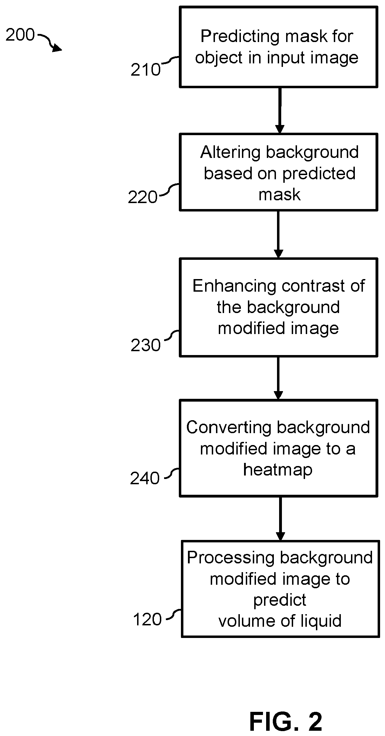

Referring now to Fig. 2, there is depicted a more in-depth flow diagram of a method 200 for estimating a volume of liquid in an at least partially transparent container. The method begins with step 210 of providing the input image as an input to a neural network-based processing algorithm trained to predict, for the input image: a mask for identifying an object of interest in the input image.

In step 220, the background image data of the input image is then removed or altered based on the predicted mask, so as to generate the background-modified image, as part of the image background removal algorithm described in step 110. By predicting a mask for an object of interest in the input image, i.e. a container, the background can more easily removed or altered. For example, based on the predicted mask identifying the object of interest in the input image, i.e. the container, the input image can be segmented into background and foreground, wherein the foreground only contains the container. The background can then be subtracted from the input image leaving an image containing only the container.

In some embodiments, removing or altering the background image data of the input image comprises: providing the input image and the predicted mask as an input to a Mask R-CNN, the Mask R-CNN being trained to predict, for each pixel of input image, a pixel classification. Mask R-CNNs have been proved to be particularly successful at classifying pixels within images with a much lower error rate than other types of neural network. The Mask R-CNN may specifically utilise FBNET-C Mask-RCNN neural network architecture, and the model may be pretrained on the COCO dataset.

During the training process, the Mask R-CNN algorithm may define the multi-task loss function for each sampled region of interest (RoI), i.e. the translucent or transparent container, as:

$$L' = L_{cls} + L_{box} + L_{mask} \tag{1}$$

$L_{cls}$ is the classification error, $L_{box}$ is the detection error, and $L_{mask}$ is the segmentation error. The Mask R-CNN algorithm may use the softmax function and the multitask function to obtain the classification value and the regression box parameter value. The sigmoid function may be used to output the mask value to realize pixel-level instance segmentation.

Provided below are examples of parameters for the Mask R-CNN architecture:

|  | Convolutional Layer1 | Convolutional Layer2 | Convolutional Layer3 | FCN Layer 1 | FCN Layer 2 | FCN Layer 3 |
|---|---|---|---|---|---|---|
| **Input Size** | 40×40×2 | 20×20×24 | 10×10×48 | 2400 | 1200 | 600 |
| **Filter Size** | 3×3 | 3×3 | 3×3 | - | - | - |
| **Padding** | 1 | 1 | 1 | - | - | - |
| **Activation** | ReLU | ReLU | ReLU | Sigmoid | Sigmoid | Sigmoid |
| **Output Size** | 20×20×24 | 10×10×48 | 5×5×96 | 1200 | 600 | 1 |

The neural network's output can be treated as a binary classification, i.e. the pixel belongs to the object of interest (the container) or not. By considering the problem as binary classification, a Binary Cross Entropy (BCE) function can be used for training:

$$E = -\frac{1}{n}\sum_{i=1}^{n}(t_i \times \log(y_i) + (1 - t_i) \times \log(1 - y_i)) \tag{2}$$

The label of the mask can be given as:

$$Mask = \begin{cases} 1 & GT_{i,j} = OOI \\ 0 & GT_{i,j} = BG \end{cases} \tag{3}$$

In equation (3), OOI denotes the object of interest and BG denotes the background. GT represents the ground truth.

In step 230, the contrast of the background-modified image is enhanced. It has been found that by enhancing the contrast of the background-modified image, the accuracy of predicting a volume of liquid in the container may be increased. Contrast enhancement may comprise contrast limited adaptive histogram equalization (CLAHE).

In step 240, the background-modified image may be converted to a heatmap, wherein the value of a pixel in the heatmap describes a pixel intensity value change of the pixel with respect to its neighbouring pixels.

It has been found that the use of heatmaps increases the accuracy of predicting a volume of liquid in an at least partially transparent container, by achieving increased distinction between liquid pixels and non-liquid pixels. The heatmap may be a colour heatmap, which gives the intensity of colour change in an image with respect to neighbouring pixels. In addition to the intensity of colour change, or instead of, the heatmap may also take into account the colour of the pixels themselves. Heatmaps may also be possible with greyscale/black and white images. The technique amplifies subtle colour variations in an image, making it easier to estimate the volume in the at least translucent container by, for example, a CNN regression model, especially when the colour of the liquid and the container are similar. By increasing the distinction between liquid pixels and non-liquid pixels, based on their pixel intensity values, the prediction of the volume of liquid may be made more accurate, with either transparent or translucent containers.

In step 120, the background-modified image (or heatmap) is processed with a machine-learning algorithm to obtain a prediction of the volume of liquid in the at least partially transparent container.

The machine-learning algorithm may be a CNN. A regression based CNN will map the features of an image to a numerical value. In this case, a CNN model may learn how a container looks when holding a particular volume of liquid. In some embodiments, a RESNET-50 backbone CNN model may be used along with five convolutional layers with ReLU activation function. A 1cycle learning rate policy may be employed to determine the best learning rate for Stochastic Gradient Descent with momentum (SGDM) optimizer. A set of example parameters for training the CNN used to obtain a prediction of the volume of liquid in the at least partially transparent container are provided below:

| Parameter | Value |
| --- | --- |
| Solver | SGDM |
| Momentum | 0.60 |
| MaxEpochs | 120 |
| Learning Rate: | 0.003 |
| Training Data | 25000 |
| Validation Data | 2500 |

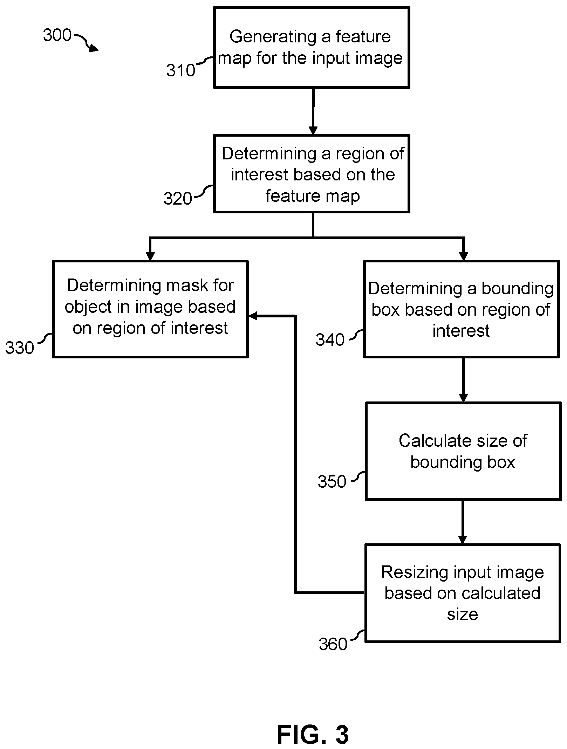

Referring now to Fig. 3, there is depicted a more in-depth flow diagram of a method 300 of processing the input image with an image background removal algorithm according to a proposed embodiment. In other words, there is depicted a more in-depth description of step 210 in Fig. 2.

In step 310, a feature map is generated for the input image using a convolutional layer which comprises part of the neural network-based processing algorithm described in relation to step 210. By generating a feature map, via the use of a convolutional layer, or layers, a region of interest may subsequently be more easily determined.

In step 320, a region of interest in the image is determined based on the feature map using a region proposal network which comprises part of the neural network-based processing algorithm described in relation to step 210. By determining a region of interest, an object of interest may subsequently be more easily identified. The region of interest may be output as a set of coordinates in the form of X, Y, W, and H, wherein X and Y denote the top left corner of the region of interest, and W and H denote the width and height of the region of interest.

In step 330, a mask for identifying an object of interest in the input image is determined based on the determined region of interest using a first fully convolutional network which comprises part of the neural network-based processing algorithm described in relation to step 210. In step 340, a box that bounds the at least partially transparent container in the input image is determined based on the determined region of interest using a second fully convolutional network which comprises part of the neural network-based processing algorithm described in relation to step 210. Fully convolutional networks are proficient at pixel wise segmentation of images in order to determine masks and bounding boxes. The bounding box may be output as a set of co-ordinates in the form of X, Y, W, and H, wherein X and Y denote the top left corner of the bounding box, and W and H denote the width and height of the box.

In some embodiments, the second fully convolutional network may also be configured to determine, based on the region of interest, a classification of the object of interest. For example, the object may be classified as an unrelated object, a container or, specifically, a breast pump container or a baby's bottle.

In step 350, a size of the determined box that bounds the at least partially transparent container in the input image is calculated. In step 360, the calculated size of the box is compared with a predetermined threshold value, and based on the comparison, the input image may be re-sized. By calculating the size of the box, an approximation of the size of the container in the image may be determined, which can be used to calculate a re-sizing of the input image so that it may more closely match images used in training data. This may allow the volume of liquid in the container to be more easily predicted.

As users may input images of containers from various angles and distances, containers of the same size may appear different sizes in images. For example, an image of a container taken from further away will appear smaller than an image taken of the same container closer. In order to overcome this, the calculated bounding box can be utilised to determine whether the image needs resizing. For example, if the area of the bounding box is below a certain threshold area, the image may be re-sized until the area is closer to a threshold value. For instance, the following example equation (4) may be used to determine if resizing needs to take place:

$$\text{rescale\_factor} = \begin{cases} (\text{area} > \text{Threshold}) & 0.5 \\ (\text{area} < \text{Threshold}) & 2.0 \end{cases} \tag{4}$$

In other words, if the area of the bounding box is greater than the threshold area, then the image is downsized by a factor of 0.5 (or any other suitable factor). Similarly, if the area is less than the threshold then the image is upsized by a factor of 2 (or any other suitable factor). After resizing has taken place, if any, a mask for identifying an object of interest in the input image, i.e. the container, may then be determined, i.e. step 330, or the background may be altered and removed in accordance with the resized input image and corresponding mask, i.e. step 220.

In some embodiments, there is provided a computer program comprising code means for implementing any of the methods described above when said program is run on a processing system.

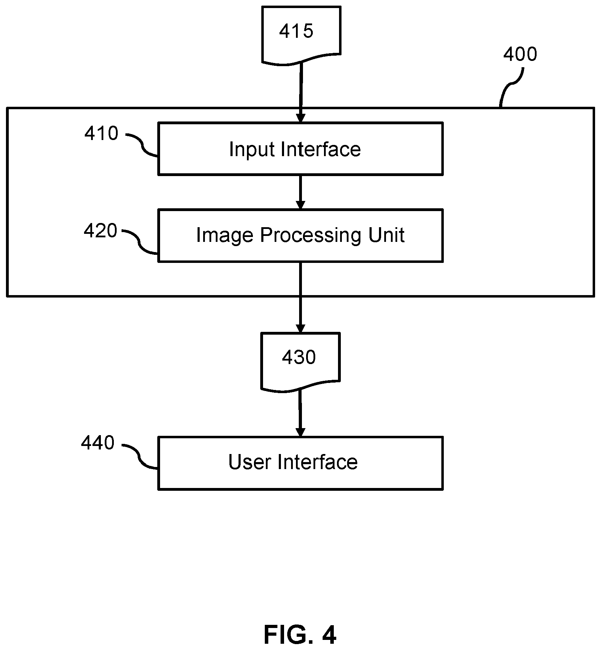

Referring now to Fig. 4, there is depicted a simplified block diagram of a system 400 for estimating a volume of liquid in an at least transparent container according a proposed embodiment. The system configured for estimating a volume of liquid in an at least transparent container comprises an input interface 410, and an image processing unit 420. The image processing unit 420 may also be referred to as a processor arrangement.

The system 400 is configured to estimate a volume of liquid in an at least partially transparent container by processing an input image 415 of an at least partially transparent container containing liquid. An input image 415 of an at least partially transparent container containing liquid is obtained. The system outputs an output 430 comprising a prediction of the volume of liquid in the at least partially transparent container. The output 430 is predicted based on processing of the input image in order to obtain a background-modified image, and then processing of the background-modified image with a machine-learning algorithm in order to obtain a prediction of the volume of liquid.

In more detail, the input interface 410 receives an input image 415 of an at least partially transparent container containing liquid. The input interface 410 provides the input image 415 to an image processing unit 420 which is configured to process the input image 415 with an image background removal algorithm in order to obtain a background-modified image, which is then processed with a machine-learning algorithm to obtain an output 430 of a prediction of the volume of liquid in the at least partially transparent container. The background-modified image is a modified version of the input image 415 wherein background image data has been removed or altered.

In some embodiments, a user interface 440 may be configured to receive, from the system 400, the output 430 of the prediction of the volume of liquid in the at least partially transparent container and display it.

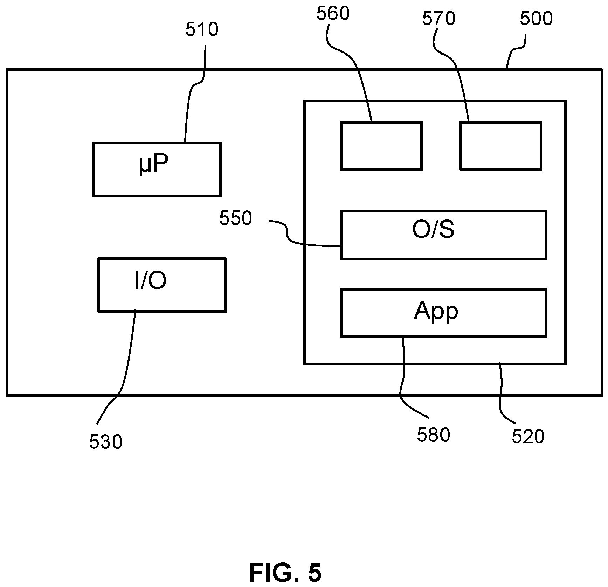

Figure 5 illustrates an example of a computer 500 within which one or more parts of an embodiment may be employed. Various operations discussed above may utilize the capabilities of the computer 500. In this regard, it is to be understood that system functional blocks can run on a single computer or may be distributed over several computers and locations (e.g. connected via internet).

The computer 500 includes, but is not limited to, PCs, workstations, laptops, PDAs, palm devices, servers, storages, and the like. Generally, in terms of hardware architecture, the computer 500 may include one or more processors 510, memory 520 and one or more I/O devices 530 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 510 is a hardware device for executing software that can be stored in the memory 520. The processor 510 can be virtually any custom made or commercially available processor, a central processing unit (CPU), a digital signal processor (DSP), or an auxiliary processor among several processors associated with the computer 500, and the processor 510 may be a semiconductor based microprocessor (in the form of a microchip) or a microprocessor.

The memory 520 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 520 may incorporate electronic, magnetic, optical, and/or other types of storage media. Note that the memory 520 can have a distributed architecture, where various components are situated remote from one another, but can be accessed by the processor 510.

The software in the memory 520 may include one or more separate programs, each of which comprises an ordered listing of executable instructions for implementing logical functions. The software in the memory 520 includes a suitable operating system (O/S) 550, compiler 560, source code 570, and one or more applications 580 in accordance with exemplary embodiments. As illustrated, the application 580 comprises numerous functional components for implementing the features and operations of the exemplary embodiments. The application 580 of the computer 500 may represent various applications, computational units, logic, functional units, processes, operations, virtual entities, and/or modules in accordance with exemplary embodiments, but the application 580 is not meant to be a limitation.

The operating system 550 controls the execution of other computer programs, and provides scheduling, input-output control, file and data management, memory management, and communication control and related services. It is contemplated by the inventors that the application 580 for implementing exemplary embodiments may be applicable on all commercially available operating systems.

Application 580 may be a source program, executable program (object code), script, or any other entity comprising a set of instructions to be performed. When a source program, then the program is usually translated via a compiler (such as the compiler 560), assembler, interpreter, or the like, which may or may not be included within the memory 520, so as to operate properly in connection with the O/S 550. Furthermore, the application 580 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 530 may include input devices such as, for example but not limited to, a mouse, keyboard, scanner, microphone, camera, etc. Furthermore, the I/O devices 530 may also include output devices, for example but not limited to a printer, display, etc. Finally, the I/O devices 530 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 530 also include components for communicating over various networks, such as the Internet or intranet.

If the computer 500 is a PC, workstation, intelligent device or the like, the software in the memory 520 may further include a basic input output system (BIOS) (omitted for simplicity). The BIOS is a set of essential software routines that initialize and test hardware at start-up, start the O/S 550, and support the transfer of data among the hardware devices. The BIOS is stored in some type of read-only-memory, such as ROM, PROM, EPROM, EEPROM or the like, so that the BIOS can be executed when the computer 800 is activated.

When the computer 500 is in operation, the processor 510 is configured to execute software stored within the memory 520, to communicate data to and from the memory 520, and to generally control operations of the computer 500 pursuant to the software. The application 580 and the O/S 550 are read, in whole or in part, by the processor 510, perhaps buffered within the processor 510, and then executed.

When the application 580 is implemented in software it should be noted that the application 580 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 580 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods of Figs. 1-3, and the system of Fig. 4, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Figure 4 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

**Claims**

1. A method for estimating a volume of liquid in an at least partially transparent container, the method comprising:

> processing (110) an input image of an at least partially transparent container containing liquid with an image background removal algorithm to obtain a background-modified image, the background-modified image being a modified version of the input image wherein background image data has been removed or altered; and
> processing (120) the background-modified image with a machine-learning algorithm to obtain a prediction of the volume of liquid in the at least partially transparent container.

**2.** The method of claim 1, wherein processing the background-modified image with a machine-learning algorithm is preceded by:
converting (240) the background-modified image to a heatmap, wherein the value of a pixel in the heatmap describes a pixel intensity value change of the pixel with respect to its neighbouring pixels.

**3.** The method of claim 1 or 2, wherein processing the background-modified image with a machine-learning algorithm is preceded by:
enhancing (230) the contrast of the background-modified image.

**4.** The method of any of claims 1 to 3, wherein processing the background-modified image with a machine-learning algorithm comprises:
providing the background-modified image as an input to a convolutional neural network, CNN, the first CNN being trained to predict, for the background-modified image, the volume of liquid in the at least partially transparent container.

**5.** The method of claim 4, wherein the CNN is trained using a training algorithm configured to receive an array of training inputs and respective known outputs, wherein a training input comprises an image of an at least partially transparent container containing liquid and respective known output comprises the volume of liquid in the at least partially transparent container.

**6.** The method of claim 4, wherein the CNN is a pretrained model further trained on images of an at least partially transparent container that have been manually annotated.

**7.** The method of any of claims 1 to 6, wherein processing the input image with an image background removal algorithm comprises;

providing (210) the input image as an input to a neural network-based processing algorithm trained to predict, for the input image: a mask for identifying an object of interest in the input image; and
removing or altering (220) background image data of the input image based on the predicted mask, so as to generate the background-modified image.

**8.** The method of claim 7, wherein the neural network-based processing algorithm comprises:

a convolutional layer configured to generate a feature map for the input image;
a region proposal network configured to determine a region of interest in the image based on the feature map;
a first fully convolutional network configured to determine, based on the region of interest, a mask for identifying an object of interest in the input image; and
a second fully convolutional network configured to determine, based on the region of interest, a box that bounds the at least partially transparent container in the input image.

**9.** The method of claim 8, wherein the second fully convolutional network is configured to determine, based on the region of interest, a classification of the object of interest.

**10.** The method of claim 8 or 9, wherein removing or altering background image data of the input image comprises:

calculating a size of the box; and
based on a comparison of the calculated size of the box with a predetermined threshold value, re-sizing the input image.

**11.** The method of any of claims 7 to 10, wherein removing or altering background image data of the input image comprises:
providing the input image and the predicted mask as an input to a Mask R-CNN, the Mask R-CNN being trained to predict, for each pixel of input image, a pixel classification.

**12.** A computer program comprising code means for implementing the method of any preceding claim when said program is run on a processing system.

**13.** A processor arrangement configured to:

process the input image with an image background removal algorithm to obtain a background-modified image, the background-modified image being a modified version of the input image wherein background image data has been removed or altered; and

process the background-modified image with a machine-learning algorithm to obtain a prediction of the volume of liquid in the at least partially transparent container.

14. A system for estimating a volume of liquid in an at least partially transparent container, the system comprising:

an input interface (410) configured to obtain an input image of an at least partially transparent container containing liquid; and

an image processing unit (420) configured to:

process the input image with an image background removal algorithm to obtain a background-modified image, the background-modified image being a modified version of the input image wherein background image data has been removed or altered; and

process the background-modified image with a machine-learning algorithm to obtain a prediction of the volume of liquid in the at least partially transparent container.

15. A liquid volume estimation system, comprising:

the system of claim 13 or 14; and

a user interface (44) configured to receive, from the system, and display the prediction of the volume of liquid in the at least partially transparent container.

100

110 Processing an input image to obtain background modified image

120 Processing background modified image to predict volume of liquid

**FIG. 1**

200

Predicting mask for
object in input image
210

↓

Altering background
based on predicted
mask
220

↓

Enhancing contrast of
the background
modified image
230

↓

Converting background
modified image to a
heatmap
240

↓

Processing background
modified image to
predict
volume of liquid
120

**FIG. 2**

FIG. 3

415

400

410 — Input Interface

420 — Image Processing Unit

430

440 — User Interface

**FIG. 4**

**FIG. 5**

Europäisches
Patentamt

European
Patent Office

Office européen
des brevets

# EUROPEAN SEARCH REPORT

Application Number

**EP 22 19 3455**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/027173 A1 (SATISH SIDDARTH [US] ET AL) 28 January 2016 (2016-01-28) | 1,3-15 | INV.<br>G06T7/11 |
| A | * abstract *<br>* paragraph [0031] *<br>* paragraph [0046] - paragraph [0050] *<br>* figures 5A-5D * | 2 | G06T7/194<br>G06T7/62 |
| X | WO 2019/023376 A1 (SIEMENS HEALTHCARE DIAGNOSTICS INC [US]) 31 January 2019 (2019-01-31) | 1,3-15 | |
| A | * abstract *<br>* paragraph [0075] - paragraph [0098] * | 2 | |
| A | US 2019/197466 A1 (HAND III GEORGE PATRICK [US] ET AL) 27 June 2019 (2019-06-27)<br>* the whole document * | 1-15 | |
| A | JP 6 923961 B2 (GAUSS SURGICAL INC) 25 August 2021 (2021-08-25)<br>* the whole document * | 1-15 | |

TECHNICAL FIELDS
SEARCHED (IPC)

G06T

The present search report has been drawn up for all claims

| Place of search | Date of completion of the search | Examiner |
|---|---|---|
| Munich | 24 January 2023 | Rusu, Alexandru |

EPO FORM 1503 03.82 (P04C01)

## ANNEX TO THE EUROPEAN SEARCH REPORT
## ON EUROPEAN PATENT APPLICATION NO.

EP 22 19 3455

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2023

| Patent document cited in search report | | Publication date | Patent family member(s) | | Publication date |
|---|---|---|---|---|---|
| US 2016027173 | A1 | 28-01-2016 | CN | 104662559 A | 27-05-2015 |
| | | | CN | 109738621 A | 10-05-2019 |
| | | | EP | 2850559 A1 | 25-03-2015 |
| | | | EP | 3831285 A1 | 09-06-2021 |
| | | | JP | 6151771 B2 | 21-06-2017 |
| | | | JP | 6356773 B2 | 11-07-2018 |
| | | | JP | 2015523113 A | 13-08-2015 |
| | | | JP | 2017106924 A | 15-06-2017 |
| | | | US | 2013301901 A1 | 14-11-2013 |
| | | | US | 2015154751 A1 | 04-06-2015 |
| | | | US | 2016027173 A1 | 28-01-2016 |
| | | | US | 2017352152 A1 | 07-12-2017 |
| | | | US | 2019385305 A1 | 19-12-2019 |
| | | | US | 2020311935 A1 | 01-10-2020 |
| | | | WO | 2013172874 A1 | 21-11-2013 |
| WO 2019023376 | A1 | 31-01-2019 | CN | 111052129 A | 21-04-2020 |
| | | | EP | 3659065 A1 | 03-06-2020 |
| | | | JP | 2020529003 A | 01-10-2020 |
| | | | US | 2020265263 A1 | 20-08-2020 |
| | | | WO | 2019023376 A1 | 31-01-2019 |
| US 2019197466 | A1 | 27-06-2019 | NONE | | |
| JP 6923961 | B2 | 25-08-2021 | EP | 3132253 A1 | 22-02-2017 |
| | | | JP | 6652499 B2 | 26-02-2020 |
| | | | JP | 6923961 B2 | 25-08-2021 |
| | | | JP | 2017521640 A | 03-08-2017 |
| | | | JP | 2020079795 A | 28-05-2020 |
| | | | JP | 2021183970 A | 02-12-2021 |
| | | | US | 2015294461 A1 | 15-10-2015 |
| | | | WO | 2015161003 A1 | 22-10-2015 |

EPO FORM P0459

For more details about this annex : see Official Journal of the European Patent Office, No. 12/82